# EUROPÄISCHE PATENTSCHRIFT

(11) **EP 3 689 842 B1**
(45) Veröffentlichungstag und Bekanntmachung des Hinweises auf die Patenterteilung: **28.07.2021**
(21) Anmeldenummer: 20020003.8
(22) Anmeldetag: 05.01.2020
(51) Int. Cl.: C04B 41/86, C03C 8/16

(54) **GLASURSUSPENSION**
GLAZING SUSPENSION
SUSPENSION DE GLAÇURE

(30) Priorität: 31.01.2019 IT 201900001387
(43) Veröffentlichungstag der Anmeldung: 05.08.2020
(73) Patentinhaber: Durst Phototechnik AG, 39042 Brixen (IT)
(72) Erfinder: Oberhuber, Dennis, 39057 Eppan a. d. Weinstrasse (IT); Waldner, Stefan, 39024 Mals (IT)
(74) Vertreter: Kempkens, Anke

(56) Entgegenhaltungen:
- EP-A1- 2 947 057

## Beschreibung

Die vorliegende Erfindung betrifft eine Glasursuspension zur Herstellung eines reliefartigen Dekors auf einer keramischen Oberfläche mittels Stössel betriebener Tintenstrahldruckköpfe nach dem Oberbegriff des Anspruchs 1. Ferner betrifft die Erfindung die Verwendung dieser Glasursuspension mittels geeigneter Tintenstrahldruckköpfe, vorzugsweise mittels Stössel betriebener Tintenstrahldruckköpfe nach Anspruch 10.

Auf keramischen Erzeugnissen werden Emailletinten bzw. Glasursuspensionen zur Funktionalisierung oder Dekorierung ihrer Oberflächen mittels geeigneter Applikationsvorrichtungen aufgetragen und anschließend eingebrannt. Bei der Fliesenkeramik besteht häufig der Wunsch einen reliefartigen Dekor auf ihre keramische Oberfläche zu realisieren. Ein dicker Auftrag ist dabei besonders begehrenswert, da dadurch der reliefartige Charakter verstärkt wird, wodurch die Fliese optisch hochwertiger erscheint.

Der Einsatz von tintenstrahldruckfähigen Emailletinten für die Realisierung derartiger Dekore ist erst seit wenigen Jahren bekannt, gewinnt jedoch aufgrund des steigenden Interesses seitens der Keramikindustrie gegenwärtig zunehmend an Bedeutung.

Durch die ES 2 386 267 A1 ist es seit 2012 beispielsweise bekannt digitale Emailtinten für Tintenstrahldrucker bereitzustellen bestehend aus einem Feststoffanteil und einem Flüssigkeitsanteil, wobei der Feststoffanteil zwischen 10-70% des Gesamtgewichtes der Tinte liegt, die Partikelgröße kleiner als 40 µm ist, und folgende Komponenten umfasst: (a) mindestens ein Flussmittel, ein keramisches Rohmaterial oder eine Fritte, und (b) mindestens ein Antiabsetzmittel. Die keramische Partikelgrößenverteilung ist dabei derart, dass 0,5 µm ≤ d50 ≤ 4,5 µm, 1 µm ≤ d90≤ 11 µm und 3 µm ≤ d100≤ 40 µm ist. Der Flüssigkeitsanteil der Tinte umfasst folgende Komponenten: (c) Wasser in einem Prozentanteil von mindestens 5% des Gesamtgewichts der Tinte, (d) mindestens 5% des Gesamtgewichts eines oder mehrerer nicht wässriger polarer Lösungsmittel und (e) Zusatzstoffe.

Durch die gattungsgleiche Anmeldung ES 2 489 293 A1 ist es seit 2014 bekannt eine Zusammensetzung einer digitalen Glasur für hohe Grammaturen größer 200 g/m2 bereitzustellen, umfassend (i) ein bei Raumtemperatur flüssiges Medium, umfassend (a) kein Antiabsetzmittel, (b) ein Gemisch aus Wasser und polarem Lösemittel, deren Gewichtsanteil zwischen 20 und 70% des Gesamtgewichts der digitalen Glasur beträgt, und (ii) mindestens ein fester Teil, bei dem es sich um eine Mischung aus Fritten und / oder keramischen Rohstoffen handelt, wie ein glasurbildendes Material, deren Gewichtsanteil zwischen 30 und 80% des Gesamtgewichts der digitalen Glasur liegt und (iii) mindestens ein lösliches Mittel im flüssigen Medium aus der Gruppe aus Dispergiermittel oder Stabilisatoren, Bindemittel, Tenside oder Feuchthaltemittel, Rheologiemodifikatoren, Antischaummittel und Konservierungsmittel, wobei der feste Teil eine Partikelgrössenverteilung von D100 < 50 µm, D90 < 35 um, D50 < 20 µm, D25 < 15 um und D10 < 10 µm aufweist, wobei die digitale Glasur die folgenden Viskositäten als Funktion der Scherrate hat:
- Viskosität (η) kleiner als 50 cps für eine Scherrate (y) von 10 s-1
- Viskosität (η) kleiner als 40 cps für eine Scherrate (y) von 100 s-1
- Viskosität (η) kleiner als 4 cps für eine Scherrate (y) von 1000 s-1

Die gleichfalls gattungsgleiche WO 2018 104 568 A1, die seit 2018 bekannt ist, befasst sich mit einem keramischen Enamel zum Emaillieren unter Verwendung von digitaler Technologie, umfassend (a) Wasser in einem Anteil zwischen 15 bis 35% in Bezug auf das Gesamtgewicht der keramischen Emaile, (b) zumindest ein Lösungsmittel aus der Familie der Glykole in einem Anteil zwischen 20 und 40% in Bezug auf das Gesamtgewicht der Emaile und mit einer Viskosität zwischen 20 mPas und 90 mPas bei 25°C, (c) zumindest eine Fritte und/oder zumindest ein keramisches Material mit einer Partikelgrösse D100 zwischen 40 µm und 65 µm und in einem Anteil zwischen 40% und 55% in Bezug auf das Gesamtgewicht der Emaile, (d) Carboxymethylcellulose in einem Anteil zwischen 0,10% und 2% in Bezug auf das Gesamtgewicht der Emaille und Natriumchlorid und/oder zumindest eine Acrylkomponente und/oder zumindest ein Polyurethan in einem Anteil zwischen 0,1% und 5% in Bezug auf das Gesamtgewicht des keramischen Enamels.

Die Verwendung der oben genannten Emailletinten können auf Grund ihrer Komposition und der relativ kleinen Partikel Probleme beim Einbrennvorgang verursachen, insbesondere wenn sie zur Erzeugung von reliefartigen Dekoren mit relativ hohen Dicken eingesetzt werden sollen.

Unterschiedliche Faktoren beeinflussen den Einbrennprozess und somit das Erscheinungsbild eines reliefartigen Dekors. Hierzu gehören unter anderem die Auftragsmenge der Glasursuspension, die Größenverteilung der Partikel des Glasurmaterials, die Brennbedingungen und damit auch beispielsweise der zeitabhängige Temperaturverlauf beim Einbrennen, die Art des Glasurmaterials sowie die Art des keramischen Körpers, auf dem die keramische Emaille eingebrannt werden soll. Dabei ist zu beachten, dass sich diese Faktoren auch gegenseitig beeinflussen.

Bei der Verwendung der oben genannten Tintenstrahldrucktinten können sich beispielsweise Probleme ergeben, wenn relativ hohe Auftragsmengen, insbesondere solche grösser 200g/m² realisiert werden sollen, da der Siede- und Brennvorgang zur Entstehung von unerwünschten Oberflächendefekten führen kann.

Wird beispielsweise eine Auftragsmenge ein und derselben Glasursuspension mit einer bestimmten Partikelgrößenverteilung erhöht (FaII1), so kann es passieren, dass der reliefartige Dekor einen allmählich höheren Ausmaß Beschädigung erleidet. Umgekehrt kann ein geringerer Auftrag zu einer geringen Beschädigung oder bestenfalls zu keiner Beschädigung des gebrannten reliefartigen Dekors führen. Das Verhalten in Fall 1 lässt sich jedenfalls beobachten, wenn die Auftragsmenge einer aus dem Stand der Technik bekannten Emailtinte oder Glasursuspension einen bestimmten Wert überschreitet. Ursächlich für die Defekte, die insbesondere auf der Oberfläche des reliefartigen Dekors zum Vorschein treten, ist insbesondere die Entfernung der Trägerflüssigkeit und die Entgasung von nicht vollständig entgastem Glasurmaterial oder anderer Komponenten der Glasursuspension beim Einbrennen derselben.

Je größer die Auftragsmenge des Glasurmaterials, desto schwieriger ist es für das beim Einbrennen entstehende Gas während des Einbrennprozesses durch die Glasurschicht rechtzeitig in ausreichenden Mengen zu entweichen, und zwar bevor sich das Glasurmaterial und/oder andere keramische Komponenten verflüssigen und eine Sperrschicht für das Gas ausbildet oder ausbilden, die das Entweichen desselben zumindest teilweise verhindert, wodurch in dieser und/oder unter dieser Gas in Form von Blasen teilweise festgehalten werden, welche Gasblasen in und/oder unter der erstarrenden Schmelze, falls sie platzen zu Vertiefungen im reliefartigen Dekor führen und/oder falls sie nicht platzen zu Irregularitäten im reliefartigen Dekor führen und optisch sichtbar sein können.

Eine unzureichende Entgasung bei einem Brennprozess kann im ungünstigen Fall sogar dazu führen, dass es zur Ausbildung eines oder mehrerer sogenannter unerwünschter, in der Fachsprache genannter "Schwarzen Herzen" in und/oder unter der Glasurschicht kommt.

Im Rahmen dieser Beschreibung werden unter "Schwarzen Herzen" schichtförmig in und/oder unter der Glasurschicht ausgebildete Kohlenstoffgebilde verstanden, die während des Brennprozesses aus dem nicht gasförmig entwichenen, verbrannten organischen Material der Glasursuspension oder des keramischen Substrates entstehen. Derartige Defekte können eine Deformierung der gebrannten Fliesenkörpers sowie die Festigkeit desselben verändern.

Ein, die Oberflächendefekte mitverursachender Komponente kann außerdem der keramische Grundkörper sowie die auf diesem gegebenenfalls aufgebrachte Engobe sein, auf dem oder auf die die Glasursuspension aufgebracht wird, da sowohl der Grundkörper als auch die Engobe selbst in den meisten Fällen nicht-entgastes keramisches Material enthält oder enthalten und somit einen gewichtigen wenn nicht sogar den größten Teil an der freisetzbaren Gasmenge ausmacht.

Ein weiterer Faktor der den Einbrennprozess beeinflusst ist die Partikelgrößenverteilung des einzubrennenden Glasurmaterials. Ein Problem, das beim Einbrennen der Glasursuspensionen aus dem Stand der Technik auftreten kann ist, wie oben bereits umrissen, die Beschädigung der Oberfläche des reliefartigen Dekors und zwar dergestalt, dass diese nach dem Einbrennen mit statistisch verteilten Vertiefungen oder unerwünschten Irregularitäten übersät sein kann.

Nicht nur eine zunehmende Dicke der aufgetragenen Schicht, sondern insbesondere auch eine abnehmende Partikelgröße des Glasurmaterials kann unter gleichbleibenden Brennbedingungen zu einer Zunahme der Beschädigung einer Oberfläche eines reliefartigen Dekors in Häufigkeit und Ausmaß führen.

Zum einen nehmen mit Abnahme der Partikelgröße sprunghaft erfolgende Schmelzprozesse leichter zu, da die kinetische Hemmung in Bezug auf den Schmelzvorgang des Glasurmaterials entsprechend abnimmt, und zwar als Folge einer drastischen Zunahme der spezifischen Oberfläche. Zum anderen stellen kleinere Partikel eine größere Gasbarriere dar als größere Partikel, da die Größe der Hohlräume zwischen den Partikeln mit kleiner werdendem Durchmesser ebenfalls abnehmen und dadurch eine dichtere Packung der Partikel erzielt wird, wodurch sie für das Gas eine zunehmend schwer passierbare Schicht ausbilden.

Dementsprechend ließen sich bis heute mit den oben bekannten tintenstrahldruckfähigen Glasursuspensionen unter gleichbleibenden Brennbedingungen defektfreie, reliefartige Dekore lediglich mit einer geringeren Dicke herstellen als mit den im Siebdruckbereich eingesetzten Druckpasten, bei denen typischerweise Partikel mit einem Durchmesser größer 45 µm zum Einsatz kommen.

Allerdings liegt den Druckpasten im Siebdruckbereich oft das Problem zugrunde, dass damit lediglich reliefartigen Dekore mit einer relativ hohen Porosität der Oberfläche und damit mit einem relativ hohen Wasseraufnahmevermögen erzeugt werden können, jedenfalls wenn der Einbrennprozess aus ökonomischen Gründen kurz gehalten werden muss.

Das Wasseraufnahmevermögen einer Fliese wird in der Fliesenindustrie aktuell nach der Norm DIN EN ISO 10545-3 bestimmt und gibt an wie viel der vorhandenen Masse einer Fliese als Wasser aufgenommen werden kann, bzw. welcher Wert nicht überschritten werden darf. Eine hohe Wasseraufnahme ist in den meisten Fällen mit einer unerwünschten geringen Beständigkeit gegen Fleckeneinwirkung und/oder geringeren Bruchfestigkeit verbunden.

Es wäre wünschenswert eine Glasursuspension zur Verfügung zu haben, mit der die oben genannten Probleme zumindest teilweise minimiert werden können.

Der vorliegenden Erfindung liegt deshalb die Aufgabe zugrunde eine zu den oben genannten Glasursuspensionen verbesserte Glasursuspension anzugeben, die die oben genannten Probleme zumindest teilweise minimiert.

Erfindungsgemäss wird die Aufgabe durch eine Glasursuspension entsprechend den Merkmalen des Anspruchs 1 gelöst. Die Unteransprüche beziehen sich auf weitere vorteilhafte und gegebenenfalls erfinderische Ausführungsformen.

Wie in Anspruch 1 beschrieben, umfasst die Glasursuspension zur Herstellung einer reliefartigen Dekorglasur auf keramischen Oberflächen mittels Stössel betriebener Tintenstrahldruckköpfe, Wasser, zumindest eine nicht-wässrige polare Flüssigkeit, ein zumindest eine Fritte und ein Flussmittel enthaltendes Glasurmaterial in Form von Partikeln.

Erfindungsgemäss ist die Glasursuspension so ausgebildet, dass sie ein nicht-Newton'sches strukturviskoses Verhalten aufweist und bei 50 Grad Celsius eine Viskosität im Bereich 50 mPas bis 400 mPas bei einer Scherrate von 10 s-1 und eine Viskosität im Bereich 40 mPas bis 80 mPas bei einer Scherrate von 100 s-1 aufweist, wobei das Glasurmaterial Partikel wenigstens zweier voneinander unterschiedlicher Partikelgrößenpopulationen enthält, wobei die zumindest erste Population (P1) einen volumetrischen Durchmesser der Partikelgrösse von 3 µm ≤ d50(v) ≤ 15 µm aufweist, wobei die zumindest zweite Population (P2) einen volumetrischen Durchmesser der Partikelgrösse von 25µm ≤ d50(v) ≤ 45µm aufweist und wobei die erste und zweite Population zusammen einen volumetrischen Durchmesser der Partikelgröße von 50 µm ≤ d100(v) ≤ 100 µm aufweist, wobei das Gewichtsverhältnis zwischen der ersten und der zweiten Population (P1:P2) in einem Bereich 1:5 bis 1:10 liegt.

Diese erfindungsgemäße Glasursuspension verhält sich so, dass sich reliefartige Dekore bei Auftragsmengen der Glasursuspension auf ein keramisches Substrat von ≥300 g/m² bis 1500 g/m² in kürzerer Zeit im Vergleich zu den oben genannten tintenstrahldruckbaren Emailletinten aus dem Stand der Technik defektlos hergestellt werden können, wenn beide unter denselben Brennbedingungen gebrannt werden würden.

Obwohl sich der Erfinder nicht auf eine einzige Erklärung oder Theorie festlegen will, wird spekuliert, dass nach dem Auftrag der erfindungsgemässen Glasursuspension auf eine keramische Oberfläche und Absetzung der festen Partikel die zweite Population die Ausbildung von Bypasswegen geringen Widerstandes für Gas, Dampf und Flüssigkeit begünstigt und die erste Population die Schließung der Poren an der Oberfläche trotz der geringen Gewichtsanteils in Bezug auf das Gesamtgewicht des Glasurmaterials ermöglicht, derart, dass sich die Glasursuspension wie oben dargelegt verhält.

Die erfindungsgemäße Glasursuspension bietet außerdem den Vorteil, dass der Gewichtsanteil eines gegebenenfalls eingesetzten Dispergiermittels in Bezug auf das Gesamtgewicht der Glasursuspension im Vergleich zu den oben genannten Emailletinten aus dem Stand der Technik zurückzufahren werden kann. Dies hat damit zu tun, dass kleinere Partikel eine grössere Oberfläche im Verhältnis zu ihrem Volumen besitzen und diese entsprechend einen größeren Mengenanteil an Dispergiermittel benötigen.

Das Dispergiermittel kann organischer oder anorganischer Natur sein.

Organische Dispergiermittel können naturgemäß ebenfalls einen Anstieg der Emissionen während dem Brennprozess bewirken. Deshalb kann erfindungsgemäß in vorteilhafter Weise der Anteil an derartigen organischen Dispergiermittel zurückgefahren werden.

Bei der Herstellung von keramischen Substraten mit reliefartigen Dekoren sollte der Fachmann ganz allgemein darauf achten, dass die Auftragsmengen der Glasursuspension im Ganzen, d.h. in absoluten Werten, nicht zu hoch sind, sodass länderspezifisch gesetzlich festgelegte Emissionsgrenzwerte durch die beim Brennprozess entstehenden Verbrennungsprodukte, darunter beispielsweise Formaldehyd, am Einsatzort nicht überschritten werden.

Gemäss einer bevorzugten Ausführungsform der Erfindung weist die zumindest erste Population einen volumetrischen Durchmesser der Partikelgrösse von 5 µm ≤ d50(v) ≤ 15 µm auf, wobei die zumindest zweite Population (P2) einen volumetrischen Durchmesser der Partikelgrösse von 30µm ≤ d50(v) ≤ 45µm aufweist und wobei die erste und zweite Population zusammen einen volumetrischen Durchmesser der Partikelgröße von 65 µm ≤ d100(v) ≤ 100 µm aufweist.

Gemäss einer besonders bevorzugten Ausführungsform der Erfindung weist die zumindest erste Population einen volumetrischen Durchmesser der Partikelgrösse von 5 µm ≤ d50(v) ≤ 15 µm auf, wobei die zumindest zweite Population (P2) einen volumetrischen Durchmesser der Partikelgrösse von 30µm ≤ d50(v) ≤ 50µm aufweist, wobei die erste und zweite Population zusammen einen volumetrischen Durchmesser der Partikelgröße von 70 µm ≤ d100(v) ≤ 100 µm aufweist.

Gemäss einer weiteren bevorzugten Ausführungsform der Erfindung umfasst die Glasursuspension ein Dispergiermittel.

Ein Dispergiermittel fördert bekanntlich Benetzung und Stabilisierung der Glasursuspension und verhindert so die Agglomeration der Partikel, das Auf- und Ausschwimmen sowie das Absetzen der jeweiligen Partikel, wodurch gegebenenfalls unter anderem auch die Druckbarkeit mittels eines Tintenstrahldruckers über längere Zeit gewährleistet werden kann. Als Dispergiermittel werden vorzugsweise Dispergiermittel auf Basis von Phosphaten, bevorzugt Polyetherphosphate wie beispielweise TEGO® Dispers 656, TEGO® Dispers 655, TEGO® Dispers 678 oder Mischungen davon eingesetzt.

Der Glasursuspension kann weiter ein Entschäumer beigemengt werden, der die Funktion hat sowohl die Schaumbildung zu verhindern als auch bereits gebildeten Schaum zu zerstören. Als Entschäumer können beispielsweise Siloxane, vorzugsweise organisch modifizierte Siloxane wie beispielsweise TEGO® Foamex 810, TEGO® Foamex 800, TEGO® Foamex 1488, TEGO® Foamex 805 N, TEGO® Foamex 831, TEGO® Foamex 825 oder Mischungen davon zum Einsatz kommen. Gemäss einer weiteren bevorzugten Ausführungsform weist die Glasursuspension eine Dichte im Bereich von 1,2 g/cm³ bis 1,6 g/cm³ bei 25°C auf.

In einer bevorzugten Ausführungsform umfasst das Glasurmaterial zumindest ein Füllstoff zur Verbesserung physikalischer und/oder chemischer Eigenschaften des reliefartigen Dekors, vorzugsweise zumindest ein anorganisches Oxid ausgewählt aus der Gruppe umfassend Aluminiumoxid, Zirkonoxid, Aluminiumtitanat, Wollastonit, Xonotlite, Zirkonsilikat, Eisenoxid, Silikate und Titandioxid.

In einer weiteren bevorzugten Ausführungsform umfasst das Glasurmaterial zumindest ein Zusatzstoff zur Erhöhung und Einstellung der Viskosität, der flüssig oder fest sein kann, wobei falls er fest ist, er Teil des Glasurmaterials ist.

Der flüssige Zusatzstoff kann Carboxymethylcellulose sein, und liegt vorzugsweise in einem Anteil zwischen 0,1 Gew% und 2,0 Gew% bezogen auf das Gewicht der Glasursuspension vor.

Gemäß einer bevorzugten Ausführungsform liegt in der Glasursuspension das Wasser in einem Anteil zwischen 30 Gew% und 60 Gew% bezogen auf das Gewicht der Glasursuspension vor.

Gemäß einer weiteren bevorzugten Ausführungsform liegt die zumindest eine nicht-wässrige polare Flüssigkeit in einem Anteil zwischen 10Gew% und 30 Gew% bezogen auf das Gewicht der Glasursuspension vor.

Die Aufgabe der vorliegenden Erfindung wird insbesondere auch durch die Verwendung einer erfindungsgemässen Glasursuspension zur Herstellung eines reliefartigen Dekors auf einer keramischen Oberfläche eines keramischen Substrates oder Engobes, das in Form einer Schicht auf das keramische Substrat aufgebracht wurde, mittels geeigneter Tintenstrahldruckköpfe, insbesondere mittels Stössel betriebener Tintenstrahldruckköpfe, gelöst.

Als Beispiel dafür seien die in der Beschreibung der WO 2013/013983 A1 von der gleichnamigen Anmelderin offenbarten Tintenstrahldruckköpfe für Tintenstrahldrucker zu erwähnen, die mittels Stössel betrieben werden. Aufgrund des großen Innendurchmessers der Düsen zwischen 250µm bis 350 µm lassen sich bei derartigen Druckköpfen Tintenstrahldrucktinten mit größeren Partikeln drucken als bei den sonst typischen piezoelektrisch betriebenen Tintenstrahldruckvorrichtungen aus dem Stand der Technik, die typischerweise Düsen mit einem Innendurchmesser von bis zu 50 µm umfassen.

Nach einer bevorzugten Ausführungsform der erfindungsgemässen Verwendung wird die Glasursuspension in Mengen von ≥ 300g/m² bis 1500 g/m² auf die keramische Oberfläche aufgetragen und anschließend mittels eines geeigneten Ofens gebrannt. Nach einer weiteren bevorzugten Ausführungsform der Verwendung wird die Glasursuspension mit Tintenstrahldruckköpfen mit Düsen, die einen Innendurchmesser in einem Bereich von 200 µm bis 400 µm, vorzugsweise 250 µm bis 300 µm, aufweisen, auf die keramische Oberfläche aufgetragen.

Durch die erfindungsgemässe Verwendung der Glasursuspension ist ein keramisches Substrat mit einem reliefartigen Dekor erhältlich.

Gemäß einer ganz bevorzugten Ausführungsform der Verwendung der Glasursuspension wird bei vorgegebenen Brennbedingungen das Gewichtsverhältnis der Glasursuspension zwischen der ersten und der zweiten Population (P1:P2) in einem Bereich 1:5 bis 1:10 derart gewählt, dass beim Auftragen der Glasursuspension in Auftragsmengen von ≥ 300 g/m² bis 1500 g/m² auf zumindest einem Bereich einer Oberfläche eines keramischen Substrates in dem zumindest einen Bereich ein keramisches Substrat mit einem reliefartigen Dekor erhalten, der eine Wasseraufnahmevermögen von <0,5% nach der Norm DIN EN ISO 10545-3 aufweist.

An dieser Stelle soll noch erläutert werden, wie die erfindungsgemäße Glasursuspension hergestellt werden kann.

Die Herstellung einer erfindungsgemässen Glasursuspension umfasst die folgenden Schritte:
- Breitstellen von getrennt vorliegenden Komponenten eines zu mischenden Glasurmaterials, wobei eine erste Komponente Partikel einer Fritte umfasst, eine zweite Komponente Partikel zumindest eines Flussmittels umfasst, gegebenenfalls eine dritte Komponente Partikel eines Füllstoffs umfasst und gegebenenfalls eine vierte Komponente Partikel eines festen Zusatzmittels zur Erhöhung und Einstellung der Viskosität umfasst,
- Mischen der ersten, zweiten und gegebenenfalls dritten und vierten Komponenten,
- Vermahlen der gemischten Komponenten und Auftrennen in verschiedene Partikelgrößenfraktionen bzw. Partikelgrößenpopulationen
- Zusammenführen der erhaltenen Fraktionen bzw. Populationen derart, dass die zumindest erste Fraktion bzw. Population (P1) einen volumetrischen Durchmesser der Partikelgrösse von 3 µm ≤ d50(v) ≤ 15 µm aufweist, wobei die zumindest zweite Fraktion bzw. Population (P2) einen volumetrischen Durchmesser der Partikelgrösse von 25µm ≤ d50(v) ≤ 50µm aufweist und wobei die erste und zweite Fraktion bzw. Population zusammen einen volumetrischen Durchmesser der Partikelgröße von 50 µm ≤ d100(v) ≤ 100 µm aufweist, wobei das Gewichtsverhältnis zwischen der ersten und der zweiten Fraktion bzw. Population (P1:P2) in einem Bereich 1:5 bis 1:10 liegt.

Die Partikelfraktionen werden aus der Siebung unter Verwendung von geeigneten Sieben erhalten. Die Partikelgrößenpopulation wird in der vorliegenden Beschreibung als Synonym für Partikelgrößenfraktion verwendet.

Die Aufgabe der vorliegenden Erfindung wird insbesondere auch durch ein Verfahren zur Herstellung eines reliefartigen Dekors auf zumindest einem Teil einer keramischen Oberfläche eines keramischen Substrats durch Dekorieren der keramischen Oberfläche unter Verwendung einer erfindungsgemässen Glasursuspension gelöst.

Erfindungsgemäss umfasst das Verfahren die folgenden Schritte:
i) Bereitstellen des keramischen Substrats
ii) Auftragen der Glasursuspension auf die keramische Oberfläche des keramischen Substrats mit einer ersten Tintenstrahldruckvorrichtung,
iii) Wobei mit einer zweiten Tintenstrahldruckvorrichtung entweder vor Schritt ii) ein Bild auf die keramische Oberfläche des keramischen Substrates gedruckt wird oder nach Schritt ii) die aufgetragene Glasursuspension zunächst zumindest teilweise getrocknet wird und anschließend das Bild auf die zumindest teilweise getrocknete Glasursuspension gedruckt wird,
iv) Nach den Schritten i bis iii) Fixieren der aufgetragenen Glasursuspension und des gedruckten Bildes durch Brennen bei Temperaturen über die Schmelztemperatur der Fritte der Glasursuspension, um ein reliefartiges Dekor mit Bild zu erzeugen.

Gemäß einer bevorzugten Ausführungsform des erfindungsgemäßen Verfahrens wird als erste Tintenstrahldruckvorrichtung eine Tintenstrahldruckvorrichtung umfassend Düsen mit einem Innendurchmesser in einem Bereich zwischen 200 µm bis 350 µm, vorzugsweise in einem Bereich zwischen 250 µm und 300 µm, bereitgestellt und als zweite Tintenstrahldruckvorrichtung eine Tintenstrahldruckvorrichtung umfassend Düsen mit einem Innendurchmesser in einem Bereich zwischen 10 µm bis 50 µm bereitgestellt.

Gemäß einer besonders bevorzugten Ausführungsform des erfindungsgemäßen Verfahrens wird als erste Tintenstrahldruckvorrichtung eine mittels Stössel betriebene Tintenstrahldruckvorrichtung bereitgestellt.

Gemäß einer weiteren bevorzugten Ausführungsform des erfindungsgemäßen Verfahrens erfolgt sowohl der Auftrag der Glasursuspension als auch das Bedrucken des Bildes in einem einzigen Durchlauf, wobei vorzugsweise die Glasursuspension in Mengen aufgetragen wird, um reliefartige Dekors mit Schichtdicke im Bereich von 200 µm bis 1200 µm zu erzeugen, und die Tintenstrahldrucktinte zum Erzeugen des Bildes in Mengen aufgetragen wird, um ein Bild mit einer Schichtdicke von 10 µm bis 40 µm zu erzeugen.

## Patentansprüche

1. Glasursuspension zur Herstellung einer reliefartigen Dekorglasur auf keramischen Oberflächen mittels Stössel betriebener Tintenstrahldruckköpfe, wobei die Glasursuspension Wasser, zumindest eine nicht-wässrige polare Flüssigkeit, ein zumindest eine Fritte und ein Flussmittel enthaltendes Glasurmaterial in Form von Partikeln umfasst, wobei die Glasursuspension so ausgebildet ist, dass sie ein nicht-Newton'sches strukturviskoses Verhalten aufweist und bei 55 Grad Celsius eine Viskosität im Bereich 50 mPas bis 400 mPas bei einer Scherrate von 10 s-1 und eine Viskosität im Bereich 40 mPas bis 80 mPas bei einer Scherrate von 100 s-1 on aufweist, wobei das Glasurmaterial Partikel wenigstens zweier voneinander unterschiedlicher Partikelgrößenpopulationen enthält, wobei die zumindest erste Population (P1) einen volumetrischen Durchmesser der Partikelgrösse von 3 µm ≤ d50(v) ≤ 15 µm aufweist, wobei die zumindest zweite Population (P2) einen volumetrischen Durchmesser der Partikelgrösse von 25µm ≤ d50(v) ≤ 50µm aufweist, wobei die erste und zweite Population zusammen einen volumetrischen Durchmesser der Partikelgröße von 50 µm ≤ d100(v) ≤ 100 µm aufweist, wobei das Gewichtsverhältnis zwischen der ersten und der zweiten Population (P1:P2) in einem Bereich 1:5 bis 1:10 liegt.

2. Glasursuspension nach Anspruch 1 **dadurch gekennzeichnet, dass** die zumindest erste Population einen volumetrischen Durchmesser der Partikelgrösse von 5 µm ≤ d50(v) ≤ 15 µm aufweist, wobei die zumindest zweite Population (P2) einen volumetrischen Durchmesser der Partikelgrösse von 30µm ≤ d50(v) ≤ 45µm aufweist, wobei die erste und zweite Population zusammen einen volumetrischen Durchmesser der Partikelgröße von 65 µm ≤ d100(v) ≤ 100 µm aufweist.

3. Glasursuspension nach Anspruch 1 oder 2 **dadurch gekennzeichnet, dass** die Glasursuspension ein Dispergiermittel, vorzugsweise ein organisches oder anorganisches Dispergiermittel, umfasst.

4. Glasursuspension nach zumindest einem der vorhergehenden Ansprüche **dadurch gekennzeichnet, dass** die Glasursuspension eine Dichte im Bereich von 1,2 g/cm³ bis 1,6 g/cm³ bei 25°C aufweist.

5. Glasursuspension nach zumindest einem der vorhergehenden Ansprüche **dadurch gekennzeichnet, dass** das Glasurmaterial zumindest ein Füllstoff zur Verbesserung physikalischer und/oder chemischer Eigenschaften der reliefartigen Dekorglasur umfasst, vorzugsweise zumindest ein anorganisches Oxid ausgewählt aus der Gruppe umfassend Aluminiumoxid, Zirkonoxid, Aluminiumtitanat, Wollastonit, Xonotlite, Zirkonsilikat, Eisenoxid und Titandioxid.

6. Glasursuspension nach zumindest einem der vorhergehenden Ansprüche **dadurch gekennzeichnet, dass** die Glasursuspension zumindest einen Zusatzstoff zur Erhöhung und Einstellung der Viskosität umfasst, der vorzugsweise flüssig oder fest ist, wobei falls er fest ist ein Teil des Glasurmaterials ist.

7. Glasursuspension nach Anspruch 6 **dadurch gekennzeichnet, dass** der flüssige Zusatzstoff Carboxymethylcellulose ist, und vorzugsweise in einem Anteil zwischen 0,1 Gew% und 2,0 Gew% bezogen auf das Gewicht der Glasursuspension vorliegt.

8. Glasursuspension nach zumindest einem der vorhergehenden Ansprüche **dadurch gekennzeichnet, dass** das Wasser in einem Anteil zwischen 30 Gew% und 60 Gew% bezogen auf das Gewicht der Glasursuspension liegt.

9. Glasursuspension nach zumindest einem der vorhergehenden Ansprüche **dadurch gekennzeichnet, dass** die zumindest eine nicht-wässrige polare Flüssigkeit in einem Anteil zwischen 10Gew% und 30Gew% bezogen auf das Gewicht der Glasursuspension liegt.

10. Verwendung einer Glasursuspension nach zumindest einem der Ansprüche 1 bis 9 zur Herstellung einer reliefartigen Dekorglasur auf einer keramischen Oberfläche eines keramischen Substrates oder einer Engobe, die in Form einer Schicht auf das keramische Substrat aufgebracht wurde, mittels geeigneter Tintenstrahldruckköpfe, vorzugsweise mittels Stössel betriebener Tintenstrahldruckköpfe.

11. Verwendung nach Anspruch 10 **dadurch gekennzeichnet, dass** bei vorgegebenen Brennbedingungen das Gewichtsverhältnis der Glasursuspension zwischen der ersten und der zweiten Population (P1:P2) in einem Bereich 1:5 bis 1:10 derart gewählt wird, dass beim Auftragen der Glasursuspension in Auftragsmengen von ≥ 300g/m² bis 1500 g/m² auf zumindest einem Bereich einer Oberfläche eines keramischen Substrates in dem zumindest einen Bereich ein keramisches Substrat mit einem reliefartigen Dekor erhalten wird, der ein Wasseraufnahmevermögen von <0,5% nach der Norm DIN EN ISO 10545-3 aufweist.

## Claims

1. Glaze suspension for the production of a relief-like decor glaze on ceramic surfaces by means of inkjet print heads operating with plungers, wherein the glaze suspension comprises water, at least one non-aqueous polar liquid, a glaze material containing at least a frit and a fluxing agent in the form of particles, wherein the glaze suspension is designed in such a way that it has a non-Newtonian pseudoplastic behaviour and at 55 degrees Celsius a viscosity in the range of 50 mPas to 400 mPas at a shear rate of 10 s-1 and a viscosity in the range of 40 mPas to 80 mPas at a shear rate of 100 s-1, wherein the glaze material contains particles of at least two different particle size populations, wherein the at least first population (P1) has a volumetric diameter of the particle size of 3 µm ≤ d50(v) ≤ 15 µm, wherein the at least second population (P2) has a volumetric diameter of the particle size of 25µm ≤ d50(v) ≤ 50 µm, wherein the first and second populations together have a volumetric diameter of the particle size of 50 µm ≤ d100(v) ≤ 100 µm, wherein the weight ratio between the first and the second population (P1: P2) ranges from 1:5 to 1:10.

2. Glaze suspension according to claim 1, **characterized in that** the at least first population has a volumetric diameter of the particle size of 5 µm ≤ d50(v) ≤ 15 µm, wherein the at least second population (P2) has a volumetric diameter of the particle size of 30µm ≤ d50(v) ≤ 45µm, wherein the first and second populations together have a volumetric diameter of the particle size of 65 µm ≤ d100(v) ≤ 100 µm.

3. Glaze suspension according to claim 1 or 2, **characterized in that** the glaze suspension comprises a dispersant, preferably an organic or inorganic dispersant.

4. Glaze suspension according to at least one of the preceding claims, **characterized in that** the glaze suspension has a density in the range of 1.2 g/cm³ to 1.6 g/cm³ at 25°C.

5. Glaze suspension according to at least one of the preceding claims, **characterized in that** the glaze material comprises at least one filler to improve physical and/or chemical properties of the relief-like decor glaze, preferably at least one inorganic oxide selected from the group comprising aluminum oxide, zirconium oxide, aluminum titanate, wollastonite, xonotlite, zirconium silicate, iron oxide and titanium dioxide.

6. Glaze suspension according to at least one of the preceding claims, **characterized in that** the glaze suspension comprises at least one additive for increasing and adjusting the viscosity, which additive is preferably liquid or solid, wherein, if it is solid, it is part of the glaze material.

7. Glaze suspension according to claim 6, **characterized in that** the liquid additive is carboxymethyl cellulose and is preferably in a proportion between 0.1wt.% and 2.0 wt.% based on the weight of the glaze suspension.

8. Glaze suspension according to at least one of the preceding claims, **characterized in that** the water is in a proportion between 30 wt.% and 60 wt.% based on the weight of the glaze suspension.

9. Glaze suspension according to at least one of the preceding claims, **characterized in that** the at least one non-aqueous polar liquid is in a proportion between 10 wt.% and 30 wt.% based on the weight of the glaze suspension.

10. Use of a glaze suspension according to at least one of claims 1 to 9 for the production of a relief-like decor glaze on a ceramic surface of a ceramic substrate or engobe, which was applied in the form of'a layer to the ceramic substrate, by means of suitable inkjet print heads, preferably by means of inkjet print heads operating with plungers.

11. The use according to claim 10, **characterized in that**, under specified firing conditions, the weight ratio of the glaze suspension between the first and the second population (P1: P2) is selected in a range from 1:5 to 1:10 in such a way that, when the glaze suspension is applied in amounts of ≥ 300g/m² to 1500 g/m² on at least one area of a surface of a ceramic substrate, in the at least one area a ceramic substrate with a relief-like decor is obtained, which has a water absorption capacity of <0.5% according to the standard DIN EN ISO 10545-3.

## Revendications

1. Suspension de glaçure pour la production d'une glaçure décorative en relief sur des surfaces céramiques au moyen de têtes d'impression à jet d'encre actionnées par pilons, la suspension de glaçure comprenant de l'eau, au moins un liquide polaire non aqueux, un matériau de glaçure contenant au moins une fritte et un agent fluide sous la forme de particules, la suspension de glaçure étant conçue de manière à avoir un comportement pseudoplastique non newtonienne et, à 55 degrés Celsius, une viscosité comprise entre 50 mPas et 400 mPas à un taux de cisaillement de 10 s-1 et une viscosité comprise entre 40 mPas et 80 mPas à un taux de cisaillement de 100 s-1, le matériau de glaçure contenant des particules d'au moins deux populations de granulométrie différentes, la au moins première population (P1) ayant un diamètre volumétrique de la granulométrie de 3 µm ≤ d50(v) ≤ 15 µm, la au moins seconde population (P2) ayant un diamètre volumétrique de la granulométrie de 25 µm ≤ d50(v) ≤ 50 µm, les première et seconde populations ayant ensemble un diamètre volumétrique de la granulométrie de 50 µm ≤ d100 (v) ≤ 100 µm, le rapport pondéral entre la première et la seconde population (P1: P2) étant compris entre 1:5 et 1:10.

2. Suspension de glaçure selon la revendication 1, **caractérisée en ce que** la au moins première population a un diamètre volumétrique de la granulométrie de 5 µm ≤ d50(v) ≤ 15 µm, la au moins deuxième population (P2) ayant un diamètre volumétrique de la granulométrie de 30 µm ≤ d50(v) ≤ 45 µm, les première et seconde populations ensemble ayant un diamètre volumétrique de la granulométrie de 65 µm ≤ d100(v) ≤ 100 µm.

3. Suspension de glaçure selon la revendication 1 ou 2, **caractérisée en ce que** la suspension de glaçure comprend un dispersant, de préférence un dispersant organique ou inorganique.

4. Suspension de glaçure selon au moins l'une des revendications précédentes, **caractérisée en ce que** la suspension de glaçure a une densité comprise entre 1,2 g/cm³ et 1,6 g/cm³ à une température de 25°C.

5. Suspension de glaçure selon au moins l'une des revendications précédentes, **caractérisée en ce que** le matériau de glaçure comprend au moins un matériel de remplissage pour améliorer les propriétés physiques et/ou chimiques de la glaçure décorative en relief, de préférence au moins un oxyde inorganique choisi parmi le groupe constitué de l'oxyde d'aluminium, de l'oxyde de zirconium, du titanate d'aluminium, de la wollastonite, de la xonotlite, du silicate de zirconium, de l'oxyde de fer et du dioxyde de titane.

6. Suspension de glaçure selon au moins l'une des revendications précédentes, **caractérisée en ce que** la suspension de glaçure comprend au moins un additif pour augmenter et ajuster la viscosité, de préférence un additif liquide ou solide, et s'il est solide, il fait partie du matériau de glaçure.

7. Suspension de glaçure selon la revendication 6, **caractérisée en ce que** l'additif liquide est la carboxyméthylcellulose, et de préférence il est disponible en une proportion comprise entre 0,1% en poids et 2,0% en poids par rapport au poids de la suspension de glaçure.

8. Suspension de glaçure selon au moins l'une des revendications précédentes, **caractérisée en ce que** l'eau est disponible en une proportion comprise entre 30% en poids et 60% en poids par rapport au poids de la suspension de glaçure.

9. Suspension de glaçure selon au moins l'une des revendications précédentes, **caractérisée en ce que** le au moins un liquide polaire non aqueux est disponible en une proportion comprise entre 10% en poids et 30% en poids par rapport au poids de la suspension de glaçure.

10. Utilisation d'une suspension de glaçure selon au moins l'une des revendications 1 à 9 pour la production d'une glaçure décorative en relief sur une surface céramique d'un substrat céramique ou d'un engobe, la glaçure décorative ayant été appliquée sous la forme d'une couche sur le substrat céramique, au moyen de têtes d'impression à jet d'encre appropriées, de préférence de têtes d'impression à jet d'encre actionnées au moyen de pilons.

11. Utilisation selon la revendication 10, **caractérisée en ce que**, dans des conditions de cuisson spécifiées, le rapport pondéral de la suspension de glaçure entre la première et la seconde population (P1: P2) est choisi dans une plage comprise entre 1:5 et 1:10 de telle sorte que, lorsque la suspension de glaçure est appliquée en des quantités de ≥ 300 g/m² à 1500 g/m² sur au moins une zone d'une surface d'un substrat céramique, un substrat céramique avec un décor en relief est obtenu dans la au moins une zone, ledit substrat ayant une capacité d'absorption d'eau de <0,5% selon la norme DIN EN ISO 10545-3.
